# EUROPEAN PATENT SPECIFICATION

(11) **EP 1 317 158 B1**
(45) Date of publication and mention of the grant of the patent: **25.04.2007**
(21) Application number: 01403072.0
(22) Date of filing: 29.11.2001
(51) Int. Cl.: H04Q 7/34

(54) **Method allowing realistic simulation of a telecommunication system**
Realistisches Simulationsverfahren eines Telekommunikationssystems
Procédé permettant la simulation réaliste d'un réseau de télécommunication

(43) Date of publication of application: 04.06.2003
(73) Proprietor: Mitsubishi Electric Information Technology Centre Europe B.V., 1119 NS Schiphol Rijk (NL)
(72) Inventor: Voyer, Nicolas, Mitsubishi Electricité, 35700 Rennes (FR); De Ryck, François, c/o Mitsubishi Electricité, 35700 Rennes (FR)
(74) Representative: Maillet, Alain

(56) References cited:
- WO-A-98/03025
- WO-A-99/66753

## Description

The present invention relates to a method for simulating operating conditions of a telecommunication system including at least two radio base stations and two mobile users of the system forming together a communication network.

Such methods are currently used for optimizing, before actual physical implementation of a telecommunication system, a deployment of radio base stations included in said system and a design of a decision-making network infrastructure which is intended to manage said network, in order to define a system able to provide optimal communication service at the lowest possible cost. US 5,561,841 shows such a setup.

Some simulation methods, known as mapping methods and currently used for optimizing GSM-type telecommunication systems, also known as 2G (standing for second generation) systems generate maps showing geographical coverage areas, each area forming a cell associated to a single base station, which map enables to assess the coverage of the system, following the general principle that if a mobile user is located within a cell and if the associated base station is not saturated, said mobile user will be provided with a satisfactory communication service.

An assessment of quality of service in UMTS-type telecommunication systems, also known as 3G (standing for third generation) systems cannot be accurately obtained by means of a method as described above, mainly because 3G systems do not perform a frequency planning as is done in 2G systems, where to two different mobile users located in a same geographical area are allocated two different communication frequencies, so as to minimize interference between said users. In 3G systems, no such frequency planning is performed, so that communication interference between mobile users can and will occur, which will adversely affect the quality of each ongoing communication to an extent which varies from one user to another according to the specific situation of each user, which extent cannot be predicted by means of the above-mentioned described methods.

Another known method, usually referred to as Monte-Carlo method, mainly consists in generating a plurality of snapshots, each being descriptive of a predetermined, random-generated situation of the system. Each snapshot then shows the location of all mobile users of the system in the corresponding situation, the base stations with which said users are communicating, and a level of power each mobile user is applying to its ongoing communication, which enables to deduce the amount of interference said user generates for other users located in his vincinity, and thus the extent to which interference generated by other users adversely affects each single user in each random-generated situation.

The Monte-Carlo method hence enables to establish, for each random-generated situation, the number of mobile users to which a satisfactory communication service is provided, and enables statistical assessment of the overall communication quality offered by the simulated system.

The usefulness of the Monte-Carlo method is, however, impaired by the following problems:

Since this method performs a statistical analysis of the simulated system, a great number of snapshots is required for said analysis to be reliable. Huge computing resources will thus be required for analyzing situations which, being generated randomly, will often be inconsistent with each other. A set of such situations, analysed as forming a whole, will thus not be representative of realistic evolutions in the operating conditions of the simulated system. This problem will become all the more sensitive as the number of simulated users and the size of the system are important, for example in simulations involving tens of thousands of users and hundreds of base stations.

Furthermore, though the Monte-Carlo method enables an overall assessment of average communication quality provided by the simulated 3G system by taking into account, among other parameters, interference generated by said users and the adverse effect of said interference on ongoing communications in each random-generated situation, the Monte-Carlo method does not enable to monitor individual communications in order to assess the quality of the service provided to, and perceived by individual users, which is the ultimate assessment criterion, since one of the main goals of system simulation is to help define a system which will match the needs of its users in order to obtain customer satisfaction.

The present invention aims at solving the above-mentioned problems, by providing a method of simulating operating conditions of a telecommunication system, which method requires less computing power than the Monte-Carlo method and enables to assess the quality of the service provided to individual users of the system.

To this end, according to a first aspect of the invention, in a simulation method essentially consisting in making a plurality of snapshots of said system, each snapshot being descriptive of a predetermined configuration of the communication network, two successive snapshots are linked together by at least one correlating parameter.

The fact that two successive snapshots are linked together enables to reduce the number of generated situations to those who are consistent with each other and thus realistic, which in turn enables to reduce the amount of computing power required for carrying out the simulation method according to the invention with respect to, for example, the Monte-Carlo method. This advantage of the invention is crucial when large systems, including for example hundreds of base stations and tens of thousands mobile users, are to be simulated.

According to a second aspect of the invention, the correlating parameter is subjected to predefined variations with respect to time.

Such a choice for the correlating parameter enables to obtain a historical view of the operating conditions of the system, and thus to follow the evolution over time of individual communications, from their beginnings to their conclusions, which in turn enables to assess the quality of the service provided to individual users.

In a specific embodiment of the invention, a position of at least one mobile user and a speed vector associated to said user are used as correlating parameters.

In an advantageous embodiment of the invention, an amount of power of signals transmitted by at least one mobile user is used as correlating parameter.

In a variant of this advantageous embodiment of the invention, a data rate of at least one ongoing communication established between a mobile user and a base station is used as correlating parameter.

These advantageous embodiments of the invention enable consistent and realistic modelization of user-generated interference, which may adversely affect each ongoing communication. These embodiment also enable to simulate appearance or disappearance of communications in the vincinity of each user, which are notions which only make sense in the context of the historical view affordable thanks to the the invention, and may impact on the quality of the ongoing communication of said user.

The invention also relates to a simulation device intended to carry out a method as described above.

The characteristics of the invention mentioned above, as well as others, will emerge more clearly from a reading of the following description given in relation to the accompanying figures, amongst which:
Fig.1 is a functionnal diagram which depicts a simulation device using a method according to the invention, and
Fig.2 is a schematic showing, on a same picture, two successive snapshots obtained by means of a simulation method according to the invention.

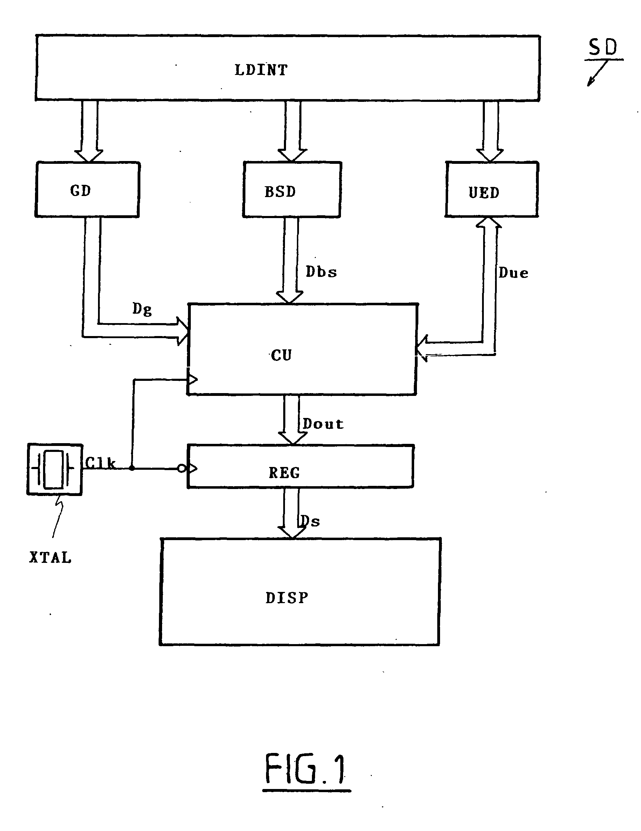

Fig.1 diagrammatically shows a simulation device SD intended to simulate operating conditions of a telecommunication system, in which a method according to the invention is used. This device SD includes a first database GD, intended to store geographical data pertaining to a landscape over wich the telecommunication system is intended to be deployed, for example models of obstacles like buildings, mountains, etc. The simulation device SD further includes a second database BSD, intended to store data pertaining to radio base stations forming a network included in the system, like a geographical location of each base station, a maximum number of communications each base station is able to handle at a given instant, or a maximum transmitting power each base station is able to apply to its ongoing communications, etc. The simulation device SD also includes a third database UED, intended to store a collection of files, each file being associated with a mobile user which will appear in the course of the simulation, and containing, listed in chronological order, successive coordinates, speeds, transmission powers or data rates to be attributed to ongoing communications between each user and a base station. The first and second databases GD and BSD thus contain data of a structural nature, representative of the deployement of the radio network included in the system and of geographical constraints said network will operate under, whereas the third database UED contains dynamic data, representative of events which will happen during the operation of the system.

In this embodiment of the invention, the first, second and third databases GD, BSD and UED are intended to be loaded by a user of the simulation device SD by means of a loading interface LDINT.

The simulation device SD includes a computing unit CU intended to process data provided by the above mentioned first, second and third databases GD, BSD and UED by means of respective data signals Dg, Dbs and Due, which processing is clocked by means of a clock signal Clk provided by a clock generator XTAL. During an analyzing step starting upon each active edge, for example a rising edge, of the clock signal Clk, the computing unit CU will generate a snapshot of the system, by fetching a set of data from the first, second and third databases GD, BSD and UED, and performing a synthesis of said data by determining, among others, which mobile user is in communication with which base station, the amount of power applied by each user to its ongoing communication and/or the amount of interference generated by each user and its adverse effects on communications of other users. The third database UED may be arranged so as to provide, among other correlating parameters, instantaneous values of specified datarates for the various communications supported by the system at the corresponding instants, in which case the computing unit CU will determine an amount of power which must be applied to each mobile user's ongoing communication for ensuring that the corresponding specified datarate is respected, and an interference level linked to this amount of power. In another possible embodiment, the third database EUD will provide a value of the power to be applied to each ongoing communication, and the computing unit CU will only have to determine, in the course of each analyzing step, the amount of interference generated by said ongoing communications.

At the end of each analyzing step, the computing unit CU delivers a set of output data signals Ds representative of the results of the above-described synthesis to a register REG for storage pruposes, which register REG is linked to a display interface DISP intended to deliver results of the simulation to the user of the simulation device SD. The storage operations performed by register REG may be sequenced by means of a clock signal derived from clock signal Clk, as for example a signal in phase opposition to said clock signal Clk, as is the case in this embodiment, which provides sufficient set-up time for said data to be safely stored. The display interface DISP may be provided with means for interpreting the output data Ds, which could enable said display interface DISP to extract from said output data Ds values of a parameter representative of communication quality, like a power-to-interference ratio, to be attributed to each mobile user, and for displaying such values, for example in varying colours or brightnesses on a map depicting the telecommunication system.

The invention thus enables to provide a user of the simulation device SD with a historical view of the operating conditions of the simulated system, and hence to follow the evolution over time of individual communications, from their beginnings to their conclusions, which in turn enables to assess the quality of the service provided to individual users.

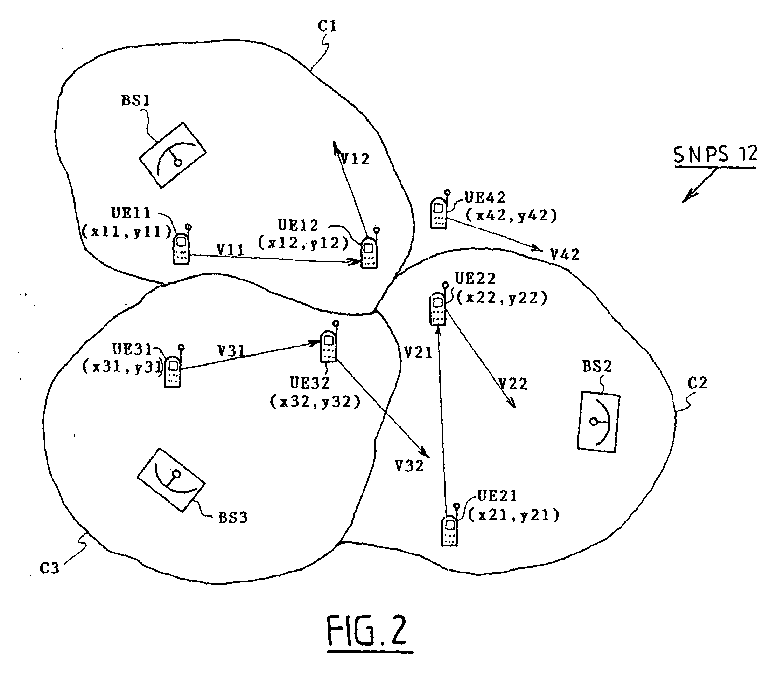

Fig.2 shows, on a same picture SNPS 12, two successive snapshots, generated by means of the invention, of a very simple telecommunication system. This system includes a first, a second and a third radio base stations BS1, BS2 and BS3, respectively, to which are attributed first, second and third coverage areas, also referred to as cells, C1, C2 and C3. Data describing the above characteristics are of a structural nature, and would be stored in the first and second databases described above. It should be noted that the maximum amount of power a base station is able to apply to its ongoing communications may vary over time, and thus cause variations in the perimeter of its coverage area to occur. Such data, though of a dynamic nature, would however preferrably be stored in the second database described above.

In a first snapshot, a first, a second and a third mobile users, referenced EU11, EU21 and EU31 are shown in first positions identified by the respective coordinates (x11, y11), (x21, y21) and (x31, y31), which form a first set of correlating parameters, a second set of correlating parameters being formed by speed vectors V11, V21 and V31 attributed to the respective mobile users EU11, EU21 and EU31. The values of these correlating parameters can be fetched from the third database described above.

In this example, only two dimensions are considered and all movements of the mobile users are coplanar, in order to simplify the drawing. A third correlating parameter, which cannot be depicted in this drawing, like the power applied by each mobile user to its ongoing communication or a datarate specific to said communication may also be used, and stored to this effect in the third database described above.

In a second snapshot, the first, second and third mobile users, then referenced EU12, EU22 and EU32, are shown in second positions identified by the respective coordinates (x12, y12), (x22, y22) and (x32, y32), which may have been supplied by the above-described third database, but may also have been computed by the computing unit on the basis of the previous speed vectors V11, V21 and V31 in combination with the previous coordinates (x11, y11), (x21, y21) and (x31, y31). New speed vectors V12, V22 and V32 are attributed in this second snapshot to the respective mobile users EU11, EU21 and EU31.

The fact that the first and second snapshot share a link enables to see how the quality of ongoing communications will be affected by the movements of the first, second and third mobile users. It appears that, in the second snapshot, all three users will be relatively close to another, while being far from their respective base stations, the latter causing each user to apply a considerable amount of power to its ongoing communication, and generate a large amount of interference to which, because of their closeness, the other users will be very sensitive. The historical view affordable thanks to the invention will enable to observe a corresponding drop of communication quality. It should also be noted that the invention enables to simulate sudden disruptive phenomena, which notion only makes sense thanks to the above-mentioned historical view, like in this example an appearance of a fourth mobile user UE42 on the second snapshot at coordinates (x42, y42), and thus in the vincinity of the other mobile users, which contributes to downgrade the communication quality perceived by each user.

According to the speed vectors V21, V22 and V23 of the second snapshot, the third mobile user UE32 will move from the third cell C3 to the second cell C2 between this second snapshot and a next one, not shown in this drawing, which will cause a handover to occur. Handovers are phenomena which occur very frequently in cellular telecommunication systems, and their simulation can only be made if the simulation method allows to represent such notions as previous cell and next cell, which is the case thanks to this embodiment of the invention, in which two successive snapshots are linked by correlating parameters whose values vary with respect to time, which in turn enables to define a chronological order in the course of the simulation.

## Claims

1. A method for simulating operating conditions of a telecommunication system including at least two radio base stations and two mobile users of the system forming together a communication network, essentially consisting in making a plurality of snapshots of said system, each snapshot being descriptive of a predetermined the operating conditions of the communication network, **characterized in that** two successive snapshots are linked together by at least one correlating parameter to provide an historical view of the operating conditions of the simulated system and to follow the evolution over time of individual communications.

2. A method as claimed in claim 1, in which said correlating parameter is subjected to predefined variations with respect to time.

3. A method as claimed in claim 2, in which a position of at least one mobile user and a speed vector associated to said user are used as correlating parameters.

4. A method as claimed in claim 2, in which an amount of power of signals transmitted by at least one mobile user is used as correlating parameter.

5. A method as claimed in claim 2, in which a data rate of at least one ongoing communication established between a mobile user and a base station is used as correlating parameter.

6. A simulation device adapted to carry out a method as claimed in any one of claims 1 to 5.

## Patentansprüche

1. Verfahren zum Simulieren von Betriebszuständen eines Telekommunikationssystems mit wenigstens zwei Basisstationen und zwei mobilen Anwendern des Systems, die zusammen ein Kommunikationsnetzwerk bilden, welches Verfahren im Wesentlichen darin besteht, eine Vielzahl von Momentaufnahmen des Systems zu machen, wobei jede Momentaufnahme die Betriebszustände des Kommunikationsnetzwerks beschreibt, **dadurch gekennzeichnet, dass** zwei aufeinanderfolgende Momentaufnahmen durch wenigstens einen korrelierenden Parameter miteinander verbunden werden, um einen historischen Überblick über die Betriebszustände des simulierten Systems zur Verfügung zu stellen und um die Entwicklung im Zeitablauf einzelner Kommunikationen zu verfolgen.

2. Verfahren nach Anspruch 1, wobei der korrelierende Parameter in Bezug auf die Zeit vordefinierten Variationen unterzogen wird.

3. Verfahren nach Anspruch 2, wobei eine Position wenigstens eines mobilen Anwenders und ein zu dem Anwender gehörender Geschwindigkeitsvektor als korrelierende Parameter verwendet werden.

4. Verfahren nach Anspruch 2, wobei ein Betrag an Leistung von durch wenigstens einen mobilen Anwender übertragenen Signalen als korrelierender Parameter verwendet wird.

5. Verfahren nach Anspruch 2, wobei eine Datenrate wenigstens einer zwischen einem mobilen Anwender und einer Basisstation aufgebauten eingehenden Kommunikation als korrelierender Parameter verwendet wird.

6. Simulationsvorrichtung, die zum Ausführen eines Verfahren nach einem der Ansprüche 1 bis 5 geeignet ist.

## Revendications

1. Procédé permettant la simulation de conditions de fonctionnement d'un système de télécommunication comprenant au moins deux stations radio de base et deux utilisateurs mobiles du système formant ensemble un réseau de communication, consistant essentiellement à réaliser une pluralité d'aperçus dudit système, chaque aperçu étant une description des conditions de fonctionnement du réseau de communication, **caractérisé en ce que** deux instantanés successifs sont reliés par au moins un paramètre de corrélation afin de fournir une vue historique des conditions de fonctionnement du système simulé et afin de suivre l'évolution dans le temps de communications individuelles.

2. Procédé selon la revendication 1, dans lequel ledit paramètre de corrélation est soumis à des variations prédéfinies en fonction du temps.

3. Procédé selon la revendication 2, dans lequel une position d'au moins un utilisateur mobile et un vecteur de vitesse associé audit utilisateur sont utilisés comme paramètres de corrélation.

4. Procédé selon la revendication 2, dans lequel une valeur de puissance des signaux émis par au moins un utilisateur mobile est utilisée comme paramètre de corrélation.

5. Procédé selon la revendication 2, dans lequel un débit de données d'au moins une communication en cours établie entre un utilisateur mobile et une station de base est utilisé comme paramètre de corrélation.

6. Dispositif de simulation adapté pour développer un procédé tel que revendiqué dans l'une quelconque des revendications 1 à 5.
